# EUROPEAN PATENT APPLICATION

(11) **EP 4 687 184 A1**
(43) Date of publication of application: **04.02.2026**
(21) Application number: 25192500.4
(22) Date of filing: 29.07.2025
(51) Int. Cl.: H01M 4/66, H01M 10/0587, H01M 50/534, H01M 50/536, H01M 50/559

(54) **ELECTRODE AND SECONDARY BATTERY**

(30) Priority: 30.07.2024 KR 20240100780
(71) Applicant: SAMSUNG SDI CO., LTD., Yongin-si, Gyeonggi-do 17084 (KR)
(72) Inventor: DOO, Jae Gyun, 16678 Suwon-si, Gyeonggi-do (KR); KIM, Gwi Jae, 16678 Suwon-si, Gyeonggi-do (KR); PARK, Seung Young, 16678 Suwon-si, Gyeonggi-do (KR)
(74) Representative: Bardehle Pagenberg Partnerschaft mbB Patentanwälte Rechtsanwälte

(57) **Abstract**

An electrode, including a substrate, a tab having a first side joined to one surface of the substrate and a second side extending away from the substrate, the first side and the second side being opposite each other along a longitudinal direction of the tab, and a metal layer on the substrate and covering at least a portion of the tab, the metal layer including a metallic material.

## Description

### CROSS-REFERENCE TO RELATED APPLICATION

The present application claims priority to and the benefit of Korean Patent Application No. 10-2024-0100780, filed on July 30, 2024 in the Korean Intellectual Property Office, the entire disclosure of which is incorporated herein by reference.

### BACKGROUND

### 1. Field

The present disclosure relates to an electrode and a secondary battery.

### 2. Description of the Related Art

Secondary batteries are batteries that can be charged and discharged, unlike primary batteries that cannot be recharged. Low-capacity secondary batteries are used in portable small electronic devices such as smartphones, feature phones, laptop computers, digital cameras, and camcorders, while high-capacity secondary batteries are widely used as power sources for motor driving in hybrid vehicles, electric vehicles, and the like, and batteries for power storage, or the like. These secondary batteries include electrodes including a positive electrode and/or a negative electrode, an electrode assembly including the electrodes, a case accommodating the electrode assembly, an electrode terminal connected to the electrode assembly, and the like.

The electrode includes a substrate and a coating layer formed on the substrate. The coating layer includes an active material. In addition, the electrode includes a tab attached to the substrate. The electrode assembly including such an electrode may be, for example, wound to form a jelly roll.

The above-described with respect to formation disclosed in the background section of the disclosure is only intended to provide a better understanding of the background of the present disclosure, and therefore, it may contain information that does not constitute prior art.

### SUMMARY

In accordance with the present disclosure, an electrode as set forth in independent claim 1 and a secondary battery as set forth in independent claim 11, are provided. Currently preferred embodiments are described in the dependent claims. Embodiments include an electrode, including a substrate, a tab having a first side joined to one surface of the substrate and a second side extending away from the substrate, the first side and the second side being opposite each other along a longitudinal direction of the tab, and a metal layer on the substrate and covering at least a portion of the tab, the metal layer including a metallic material.

The metal layer may be joined to the substrate by a welded portion.

The welded portion may be spaced a predetermined distance apart from the tab and/or may be parallel to the tab.

The metal layer and the substrate may include a same material.

The substrate may include aluminum, and the metal layer may include aluminum, a metal coated with aluminum, aluminum coated with another material, and/or an alloy including aluminum.

The substrate may include copper, and the metal layer may include copper, a metal coated with copper, copper coated with another material, and/or an alloy including copper.

The substrate may include copper, and the metal layer may include at least one of iron, stainless steel, nickel, gold, silver and a combination thereof.

In a cross-section of the tab perpendicular to a longitudinal direction of the tab, the metal layer may include a tab cover layer corresponding to a shape of the tab, the tab cover layer surrounding the tab, and a substrate cover layer extending from the tab cover layer, the substrate cover layer being on the substrate.

The electrode may further include an additional metal layer on another surface of the substrate, the additional metal layer including a metallic material.

The electrode may further include an active material layer on a part of another surface of the substrate, wherein the tab is joined on the one surface of the substrate without the active material layer, and the metal layer does not cover the active material layer.

Embodiments include a secondary battery, including an electrode assembly in which an electrode and a separator are alternately stacked, and a case in which the electrode assembly is accommodated, and wherein the electrode includes a substrate, a tab having a first side joined to one surface of the substrate and a second side extending away from the substrate, the first side and the second side being opposite each other along a longitudinal direction of the tab, and a metal layer on the substrate and covering at least a portion of the tab, the metal layer including a metallic material.

The metal layer may be joined to the substrate by a welded portion.

The welded portion may be spaced a predetermined distance apart from the tab, the welded portion may be parallel to the tab.

The metal layer and the substrate may include a same material.

The substrate may include aluminum, and the metal layer may include at least one of aluminum, a metal coated with aluminum, aluminum coated with another material, and an alloy containing aluminum.

The substrate may include copper, and the metal layer may include at least one of copper, a metal coated with copper, copper coated with another material, and an alloy containing copper.

The substrate may include copper, and the metal layer may include at least one of iron, stainless steel, nickel, gold and silver.

In a cross-section of the tab perpendicular to a longitudinal direction of the tab, the metal layer may include a tab cover layer corresponding to a shape of the tab, the tab cover layer surrounding the tab, and a substrate cover layer extending from the tab cover layer, the substrate cover layer being on the substrate.

The electrode assembly may include a winding with a curvature, and/or the metal layer may be bent with the curvature.

The electrode may include an additional metal layer on another surface of the substrate, the additional metal layer including a metallic material.

### BRIEF DESCRIPTION OF THE DRAWINGS

Features will become apparent to those of ordinary skill in the art by describing in detail exemplary embodiments with reference to the attached drawings, in which:
FIG. 1 is a cross-sectional view schematically showing a cylindrical secondary battery according to an embodiment of the present disclosure;
FIG. 2 is a cross-sectional view schematically showing an electrode according to an embodiment of the present disclosure;
FIG. 3 is a top view schematically showing an electrode according to an embodiment of the present disclosure;
FIG. 4 is a top view schematically showing an electrode according to an embodiment of the present disclosure;
FIG. 5 is a cross-sectional view taken along line A-A' of FIG. 3 showing an example of a metal layer according to an embodiment of the present disclosure;
FIG. 6 is a cross-sectional view taken along line A-A' of FIG. 3 showing an example of the metal layer according to an embodiment of the present disclosure;
FIG. 7 is a top view schematically showing an electrode according to an embodiment of the present disclosure;
FIG. 8 is a top view schematically showing an electrode according to an embodiment of the present disclosure;
FIG. 9 is a top view schematically showing an electrode according to an embodiment of the present disclosure;
FIG. 10 is a cross-sectional view schematically showing an electrode according to an embodiment of the present disclosure;
FIG. 11 is a cross-sectional view schematically showing an electrode according to an embodiment of the present disclosure; and
FIG. 12 is a cross-sectional view schematically showing an electrode according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way. Therefore, the embodiments described with respect to this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

In addition, when used in the present specification, "comprise" and "include" and/or "comprising" and "including" specify the presence of stated features, numbers, steps, operations, members, elements, and/or groups thereof and do not preclude the presence or addition of one or more other features, numbers, steps, operations, members, elements, and/or groups.

In addition, to aid understanding of the disclosure, the accompanying drawings may not be shown to scale, and the dimensions of some components may be exaggerated. In addition, the same reference numerals may be assigned to the same components in different embodiments.

The statement that two comparative objects are 'identical' means they are 'substantially identical'. Therefore, substantially identical may include a case that have a deviation considered low in the industry, for example, a deviation of less than 5%. In addition, the indication that a certain parameter is uniform in a predetermined area may mean uniform from an average perspective.

Although first, second, and the like are used to describe various components, it goes without saying that these components are not limited by these terms. These terms are only used to distinguish one component from another component, and unless otherwise stated, it goes without saying that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

In addition, when a first component is described as being "connected," "coupled," or "joined" to a second component, the components may be directly connected or joined, but it should be understood that a third component may be "interposed" between the components, or the components may be "connected," "coupled," or "joined" through the third component. In addition, when a first component is described as being "electrically coupled to" a second component, this includes not only a case in which the first component is "directly coupled" to the second component, but also a case in which the first component is "coupled" to the second component with a third component interposed therebetween.

When referring to "A and/or B" throughout the specification, this means A, B, or A and B unless otherwise specified. In other words, the term "and/or" includes all or any combination of the plurality of listed items. When referring to "C to D," this means C or more and D or less unless otherwise specified.

The terminology used in the present application is for the purpose of describing embodiments of the present disclosure and is not intended to limit the present disclosure.

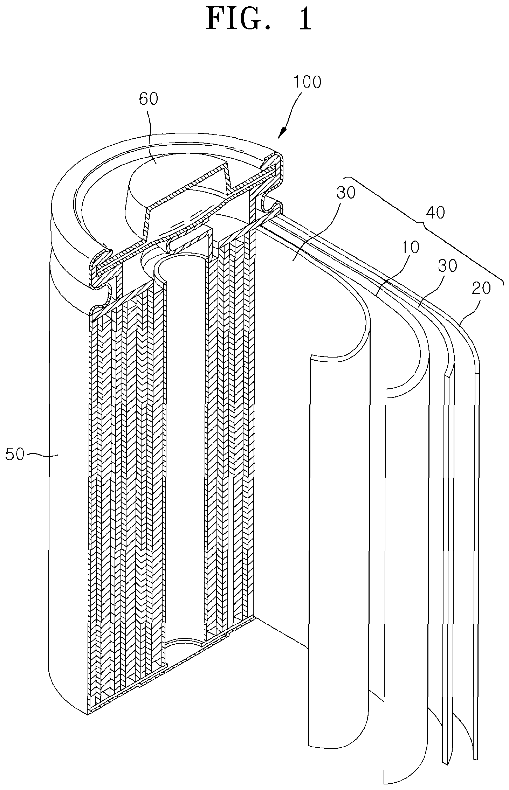

FIG. 1 is a cross-sectional view schematically showing a cylindrical secondary battery according to an embodiment of the present disclosure.

As shown in FIG. 1, a secondary battery 100 (of the cylindrical, lithium-ion type) according to an embodiment of the present disclosure may include a cylindrical case 50, an electrode assembly 40, and a cap assembly 60. In addition, the secondary battery 100 (of the cylindrical, lithium-ion type) may further include a center pin in some embodiments. Also, in the secondary battery 100 according to an embodiment of the present disclosure, since the cap assembly 60 also performs a current interrupt operation, the cap assembly 60 may be referred to as a current interrupt device in some cases.

The cylindrical case 50 may include a substantially circular bottom portion and a cylindrical side wall that upwardly extends a predetermined length from the circumference of the bottom portion. During the manufacturing process of the secondary battery, an upper portion of the cylindrical case 50 is open. Therefore, during the assembly process of the secondary battery, the electrode assembly 40 and the center pin may be inserted into the cylindrical case 50 along with an electrolyte. The cylindrical case 50 may be made of, for example, steel, stainless steel, aluminum, an aluminum alloy, or an equivalent thereof, but the material of the case may vary.

The electrode assembly 40 may be accommodated inside the cylindrical case 50. The electrode assembly 40 may include a negative electrode 20 in which a negative electrode active material (for example, graphite, carbon, etc.) is coated on a negative electrode current collector plate, a positive electrode 10 in which a positive electrode active material (for example, a transition metal oxide (LiCoO₂, LiNiO₂, LiMn₂O₄, etc.)) is coated on a positive electrode current collector plate, and a separator 30 located between the negative electrode 20 and the positive electrode 10 to prevent a short circuit and allow only the movement of lithium ions. In addition, the negative electrode 20, the positive electrode 10, and the separator 30 may be wound in a substantially cylindrical shape.

The cap assembly 60 includes a cap-up. The cap assembly 60 may further include at least one of a cap-down, a vent, and an insulator. The cap assembly 60 may be coupled to an opening of the cylindrical case 50 so that the electrode assembly 40 is sealed inside the case 50.

However, the case may be formed in any of various shapes such as a circular shape or a pouch shape. In addition, the case may be made of a metal, such as aluminum, an aluminum alloy, or nickel-plated steel, or a laminated film or plastic that forms a pouch.

Meanwhile, as described above, the electrode assembly 40 may include the negative electrode 20, the positive electrode 10, and the separator 30 located between the negative electrode 20 and the positive electrode 10. In addition, the electrode assembly 40 may be accommodated in the cylindrical case 50 along with the electrolyte. Hereafter, the electrode assembly 40 and the electrolyte will be described.

As the positive electrode active material, a compound capable of reversible intercalation and deintercalation of lithium (a lithiated intercalation compound) may be used. Specifically, at least one of composite oxides of a metal selected from cobalt, manganese, nickel, a combination thereof and lithium may be used as the positive electrode active material.

The composite oxide may be a lithium transition metal composite oxide, and specific examples may include a lithium nickel oxide, a lithium cobalt oxide, a lithium manganese oxide, a lithium iron phosphate compound, a cobalt-free nickel-manganese oxide, or a combination thereof.

As an example, a compound represented by any of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐNm_{1-b}G_{b}O₂

(0.90≤a≤1.8, 0.001≤b≤0.1); LiₐMn₂G₈O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode 10 for the secondary battery 100 may include a current collector and a positive electrode active material layer formed on the current collector. The positive electrode active material layer may include the positive electrode active material, and may further include a binder and/or a conductive material.

The content of the positive electrode active material may range from 90 wt% to 99.5 wt% based on 100 wt% of the positive electrode active material layer, and the contents of the binder and the conductive material may each range from 0.5 wt% to 5 wt% based on 100 wt% of the positive electrode active material layer.

Al may be used as the current collector, but the material of the current collector may vary.

The negative electrode active material may include a material capable of reversible intercalation/deintercalation of lithium ions, lithium metal, an alloy of lithium and a metal, a material capable of doping and/or dedoping lithium, or a transition metal oxide.

The material capable of reversible intercalation/deintercalation of lithium ions may be a carbon negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, pitch carbide, mesophase pitch carbide, calcined coke, and the like.

As the material capable of doping and/or dedoping lithium, a Si negative electrode active material or a Sn negative electrode active material may be used. The Si negative electrode active material may be silicon, a silicon-carbon composite, SiOₓ (0 < x < 2), a Si alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles.

The silicon-carbon composite may further include crystalline carbon. For example, the silicon-carbon composite may include a core containing crystalline carbon and silicon particles and an amorphous carbon coating layer located on the surface of the core.

The negative electrode 20 for the secondary battery 100 (e.g., lithium) may include a current collector and a negative electrode active material layer located on the current collector. The negative electrode active material layer may include the negative electrode active material and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

A non-aqueous binder, an aqueous binder, a dry binder, or a combination thereof may be used as the binder. When the aqueous binder is used as the negative electrode binder, a cellulose compound may be further included to impart viscosity.

As the negative electrode current collector, one selected from a copper foil, a nickel foil, a stainless steel foil, a titanium foil, a nickel foam, a copper foam, a conductive metal-coated polymer substrate, and a combination thereof may be used.

The electrolyte for the secondary battery 100 (e.g., lithium) may include a non-aqueous organic solvent and/or a lithium salt.

The non-aqueous organic solvent may serve as a medium through which ions involved in the electrochemical reaction of the battery may move.

The non-aqueous organic solvent may be a carbonate, ester, ether, ketone, or alcohol solvent, an aprotic solvent, or a combination thereof, and may be used alone or in combination of two or more.

In addition, when using the carbonate solvent, a mixture of a cyclic carbonate and a chain carbonate may be used.

Depending on the type of secondary battery 100 (e.g., lithium), the separator 30 may be present between the positive electrode 10 and the negative electrode 20. As the separator 30, polyethylene, polypropylene, polyvinylidene fluoride, or a multilayer film of two or more layers thereof may be used.

The separator 30 may include a porous substrate and a coating layer containing an organic material, an inorganic material, or a combination thereof located on one surface or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but may vary.

The organic material and/or the inorganic material may be present as a mixture in one coating layer or may be present in a form in which a coating layer containing an organic material and a coating layer containing an inorganic material are stacked.

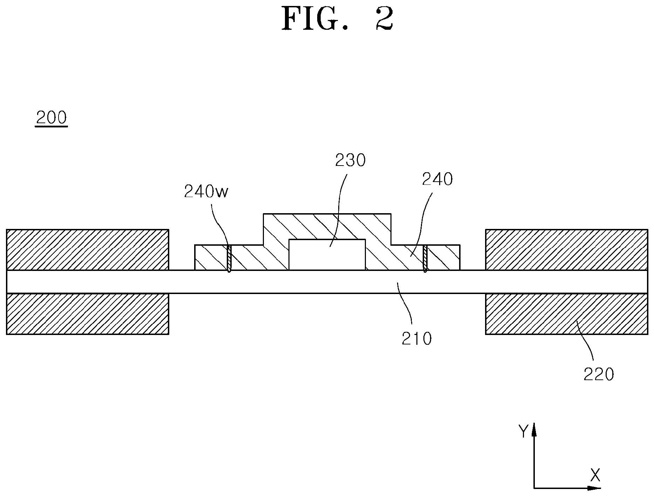

FIG. 2 is a cross-sectional view schematically showing an electrode 200 according to an embodiment of the present disclosure.

The electrode 200 includes a substrate 210, a tab 230 having one side joined to one surface of the substrate 210 and the other side (e.g., a second side) extending from the substrate 210 (e.g., a first side of the tab 230 joined to one surface of the substrate and a second side extending away from the substrate, the first side and the second side being opposite each other along a longitudinal direction of the tab), and a metal layer 240 provided on the substrate 210 while covering at least a portion of the tab 230 and including a metallic material.

With this configuration, the electrode 200 can prevent cracks from occurring in the substrate 210. In addition, the electrode 200 can maintain electrical conductivity even when cracks occur in the substrate 210. Hereinafter, each of the components of the electrode 200 will be described in further detail.

The electrode 200 may include a positive electrode 10 and/or a negative electrode 20. For example, as described with respect to FIG. 1, the electrode assembly 40 according to an embodiment of the present disclosure may include the positive electrode 10 and the negative electrode 20. In this case, the positive electrode 10 included in the electrode assembly 40 may provide the electrode 200 according to an embodiment of the present disclosure. In this case, the negative electrode 20 included in the electrode assembly 40 may provide the electrode 200 according to an embodiment of the present disclosure. Furthermore, the positive electrode 10 and the negative electrode 20 included in the electrode assembly 40 may provide the electrode 200 according to an embodiment of the present disclosure.

The electrode 200 may include the substrate 210 and/or a coating layer 220 provided on a portion of the substrate 210.

The substrate 210 may include the current collector described with respect to FIG. 1. For example, when the electrode 200 is the positive electrode 10, the substrate 210 may include a positive electrode current collector. The positive electrode current collector may include, for example, aluminum (Al). When the electrode 200 is the negative electrode 20, the substrate 210 may include a negative electrode current collector. The negative electrode current collector may include, for example, copper (Cu).

The coating layer 220 may include an active material, e.g., the active material layer described with respect to FIG. 1. When the electrode 200 is the positive electrode 10, the active material may include a positive electrode active material. When the electrode 200 is the negative electrode 20, the active material may include a negative electrode active material. In addition, the coating layer 220 may further include a binder and/or a conductive material.

The coating layer 220 may be applied on the substrate 210 in the form of a slurry including the active material. In other embodiments, the coating layer 220 may be attached to the substrate 210 in the form of a freestanding film including the active material.

In this case, the coating layer 220 may be provided on a portion of the substrate 210. For example, the coating layer 220 may be provided on a portion of one surface of the substrate 210. In other embodiments, for example, as shown in FIG. 2, the coating layer 220 may be provided on portions of both surfaces of the substrate 210. In this case, a region in which the coating layer 220 is provided on a portion of the substrate 210 may be referred to as a coated portion for convenience. In addition, as the other portion of the substrate 210, a region in which the coating layer 220 is not provided and the substrate 210 is exposed to the outside may be referred to as an uncoated portion for convenience.

The electrode 200 may include the tab 230 attached to the substrate 210. The tab 230 may have one side attached to the substrate 210. The tab 230 may extend from one side toward the other side. Accordingly, the other side of the tab 230 may not be attached to the substrate 210 and/or may be formed by extending outward from the substrate 210.

For example, as shown in FIG. 2, the tab 230 may include a middle tab in which the coating layer 220 is provided at both sides of the tab 230. In other embodiments, for example, the tab 230 may include a case in which the tab 230 is attached to an end portion of the substrate 210, unlike as shown in FIG. 2. In this way, the tab 230 may include any type of tab in which at least one side thereof is provided on the substrate 210.

The tab 230 may provide a passage through which the electrode 200 may be electrically connected to the outside. To this end, the tab 230 may include a conductive material. For example, the tab 230 may include a metallic material. Therefore, electrons may move to the electrode 200 along the tab 230 or from the electrode 200 to the outside through the tab 230.

The tab 230 may be attached to the substrate 210. For example, the tab 230 may be attached to the substrate 210 through a conductive tape or an adhesive material. In other embodiments, when the tab 230 includes a metallic material, the tab 230 may be attached to the substrate 210 through welding.

As described above, the electrode 200 may include the tab 230. In this case, as the secondary battery 100 performs charging/discharging or deteriorates, the electrode 200 may repeatedly expand and contract. The substrate 210 may be pressed by the separator and/or the electrode located in front of and behind the substrate 210. In particular, a tab boundary portion, which is a region where the tab 230 is attached in the substrate 210, may be more strongly pressed. In this case, cracks may occur in the substrate 210.

In order to solve this problem, the electrode 200 according to an embodiment of the present disclosure may include the metal layer 240 provided on the substrate 210 while covering the tab 230. Therefore, the metal layer 240 can reinforce the mechanical strength of the substrate 210. In addition, the metal layer 240 can prevent cracks from occurring in the substrate 210.

Meanwhile, the metal layer 240 may be formed on the substrate 210 while covering the tab 230, but may be provided so as not to cover the coating layer 220. That is, the metal layer 240 may be located only on the uncoated portion and/or may not be located on the coated portion. Therefore, the metal layer 240 may reinforce the strength of the substrate 210 while preventing the problem of increased resistance or decreased capacity by blocking the coating layer 220.

The metal layer 240 may include a metallic material. In this case, the metallic material may include any conductive material through which electrons can move. Therefore, even when cracks occur in the substrate 210, the metal layer 240 may allow electrons to move through the metal layer 240 provided on the substrate 210. Accordingly, the reliability of the electrode 200 can be improved.

Meanwhile, the electrode 200 accommodated in the cylindrical case 50 may be generally bent to form a jelly roll. In this case, even when a reinforcing tape is attached to the substrate 210 while covering the tab 230, the tape may be lifted at a boundary region between the tab 230 and the substrate 210. Accordingly, there is a problem that cracks may occur in a region in which the tape is lifted. In contrast, since the metal layer 240 according to an embodiment of the present disclosure includes a metallic material, the metal layer 240 may be joined to the substrate 210 through welding. That is, the metal layer 240 may be joined to the substrate 210 through a welded portion 240w. The metal layer 240 may be firmly fixed to the substrate 210 so that the metal layer 240 is not lifted from the tab 230 even when the substrate 210 is bent. Accordingly, the metal layer 240 can prevent a problem of decreased reliability due to substrate cracks occurring in the tab boundary portion between the tab 230 and the substrate 210.

Meanwhile, for example, the metal layer 240 may include the same material as that included in the substrate 210. For example, when the substrate 210 includes aluminum as the positive electrode current collector, the metal layer 240 may include aluminum, a metal coated with aluminum, aluminum coated with another material, or an alloy containing aluminum. In other embodiments, for example, when the substrate 210 includes copper as the negative electrode current collector, the metal layer 240 may include copper, a metal coated with copper, copper coated with another material, or an alloy containing copper. In this way, since the metal layer 240 includes the same type of material as that of the substrate 210, it is possible to further improve weldability with the substrate 210.

However, the material included in the metal layer 240 may include not only the same material as the material included in the substrate 210 but also any material with good weldability with the material included in the substrate 210. For example, when the substrate 210 includes copper, the metal layer 240 may include at least one of iron (Fe), stainless steel (SUS), nickel (Ni), gold (Au), silver (Ag), and a combination thereof, as a material with good weldability with copper.

With this structure, the electrode 200 according to an embodiment of the present disclosure can reinforce the strength of the substrate 210 and/or improve the reliability thereof.

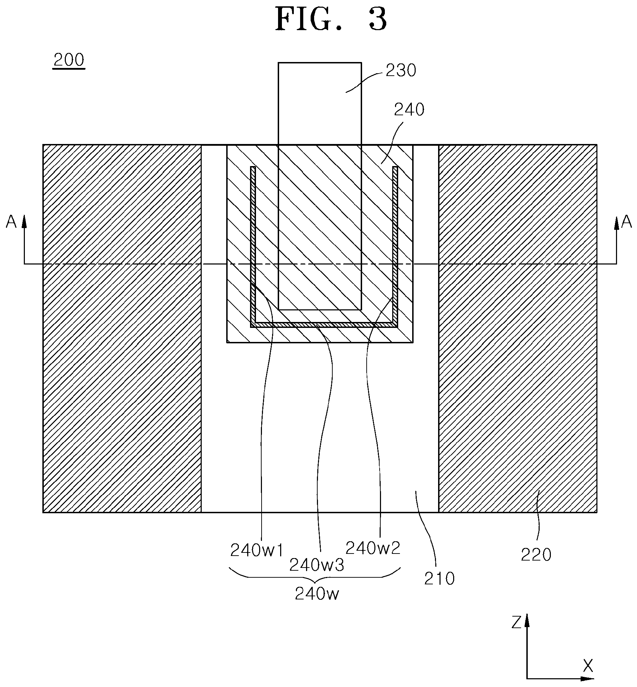

FIG. 3 is a top view schematically showing an electrode according to an embodiment of the present disclosure.

In FIG. 3, an x-axis denotes a width direction of the tab 230. In addition, in FIG. 3, a z-axis denotes a longitudinal direction of the tab 230.

In FIG. 3, an electrode 200 is shown (including, for example, the electrode described with respect to FIGS. 1 to 2) according to an embodiment of the present disclosure. As described with respect to FIG. 2, the electrode 200 may include a metal layer 240 provided on the substrate 210 while covering the tab 230 (e.g., while covering a portion of the tab 230). In FIG. 3, a welded portion 240w joining the substrate 210 and the metal layer 240 will be described.

The metal layer 240 according to an embodiment of the present disclosure may be joined to the substrate 210 by forming the welded portion 240w through welding with the substrate 210. The welding may include, for example, laser welding, ultrasonic welding, and the like.

The welded portion 240w may be spaced a predetermined distance from the tab 230 and/or formed parallel to the tab 230. The welded portion 240w may be formed to be spaced a predetermined distance apart from the tab boundary portion between the substrate 210 and the tab 230. In this case, the predetermined distance may be 1 mm or more. When the predetermined distance is formed to be less than 1 mm, the tab 230 may be damaged as the welded portion 240w is formed. Therefore, the metal layer 240 may be firmly fixed to the substrate 210 and/or the tab 230 while preventing the tab 230 from being damaged.

In this case, for example, as shown in FIG. 3, the welded portion 240w may be formed to surround the tab 230 along a boundary between the tab 230 and the substrate 210. The welded portion 240w may be formed to surround the tab 230 along a boundary between the tab 230 and the substrate 210 (e.g., along three sides of the tab 230, as viewed in a top view). Therefore, the metal layer 240 may be more firmly joined to the substrate 210.

In other embodiments, the welded portion 240w may be formed along a boundary between side surfaces and/or a bottom surface of the tab 230 and the substrate 210. For example, the welded portion 240w may include one or two selected from a left welded portion 240w1 formed along a boundary of a left side of the tab 230, a right welded portion 240w2 formed along a boundary of a right side of the tab 230, and a rear welded portion 240w3 formed along a boundary of a rear side of the tab 230.

In this case, the left side of the tab 230 and the right side of the tab 230 may refer to a left side and a right side of the tab 230 along the x-axis. Therefore, the left welded portion 240w1 may be a welded portion provided at the left side along the x-axis on a side surface of the tab 230. In addition, the right welded portion 240w2 may be a welded portion provided at the right side along the x-axis on a side surface of the tab 230. In this case, the rear welded portion 240w3 may be a welded portion provided at one side of the tab 230 along the z-axis direction.

Therefore, a metal layer 240 with improved process efficiency can be provided.

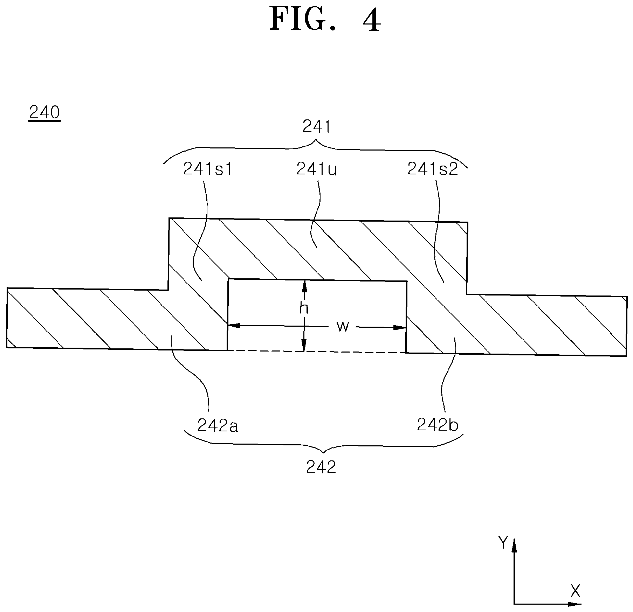

FIG. 4 is a top view schematically showing an electrode according to an embodiment of the present disclosure.

In FIG. 4, metal layer 240 of an electrode is shown (including, for example, the electrode described with respect to FIGS. 1 to 3) according to an embodiment of the present disclosure.

The metal layer 240 according to an embodiment of the present disclosure may be joined to the substrate 210 by forming the welded portion 240w through welding with the substrate 210. The welding may include, for example, laser welding, ultrasonic welding, and the like.

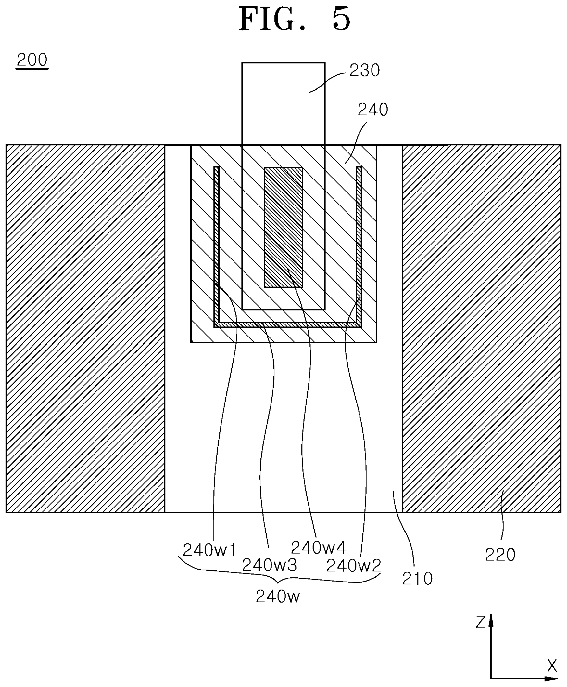

The welded portion 240w (see FIG. 5) may be spaced a predetermined distance from the tab 230 and/or formed parallel to the tab 230.

For example, as described with respect to FIG. 3, the welded portion 240w may include at least one of the left welded portion 240w1, the right welded portion 240w2, and the rear welded portion 240w3. Furthermore, the welded portion 240w may further include an upper welded portion 240w4.

The upper welded portion 240w4 may be formed by directly joining the tab 230 and the metal layer 240. For example, the upper welded portion 240w4 may be formed by performing welding from an upper side of the metal layer 240 toward the tab 230. That is, the upper welded portion 240w4 may be a welded portion that connects the tab 230 and the metal layer 240 in a y-axis direction. For example, the tab 230 and the metal layer 240 may be welded through the upper welded portion 240w4 while reducing resistance dispersion that may occur during welding of the tab 230 and the metal layer 240.

For example, the welded portion 240w may include at least one of the left welded portion 240w1, the right welded portion 240w2, the rear welded portion 240w3, and the upper welded portion 240w4. Therefore, the metal layer 240 may be attached to the tab 230 while reducing resistance dispersion.

FIG. 5 is a cross-sectional view taken along line A-A' of FIG. 3 showing an example of a metal layer according to an embodiment of the present disclosure.

In FIG. 5, an x-axis denotes the width direction of the tab 230 described with respect to FIG. 3. In addition, in FIG. 5, a y-axis (e.g., straight into the page) denotes a height direction of the tab 230. In this case, the height direction of the tab 230 is perpendicular to the width direction of the tab 230.

In FIG. 5, reference numeral 240 denotes a metal layer (including, for example, the metal layer described with respect to FIGS. 2 to 4) according to an embodiment of the present disclosure. As described with respect to FIGS. 2 to 4, the electrode 200 may include the metal layer 240 provided on the substrate 210 while covering the tab 230.

As described above, the metal layer 240 may include a metallic material. The metal layer 240 has relatively high rigidity compared to a polymer material in the form of a film, such as tape. The metal layer 240 may be molded to correspond to a shape of the tab 230 (e.g., the metal layer 240 may be formed over the tab 230 to trace the outer shape of the tab 230 and/or be continuously conformal over the tab 230). Accordingly, the metal layer 240 may be joined with the tab 230 and the substrate 210 while coming into close contact therewith without forming any gap between the tab 230 and the substrate 210.

For example, in a cross-section perpendicular to the longitudinal direction of the tab 230, the metal layer 240 may be formed to correspond to the shape of the tab 230. The metal layer 240 (see FIG. 4) may include a tab cover layer 241 provided to surround the tab 230, and a substrate cover layer 242 that extends from the tab cover layer 241 and is provided on the substrate 210.

The tab cover layer 241 may include an upper surface tab cover layer 241u that covers the upper surface of the tab 230, a left side surface tab cover layer 241s1 that covers the left side surface of the tab 230, and a right side surface tab cover layer 241s2 that covers the right side surface of the tab 230. The tab cover layer 241 may protect the tab 230 and may be electrically connected to the tab 230 at the same time.

A shape of the tab cover layer 241 may be formed to correspond to the shape of the tab 230 covered by the tab cover layer 241 (e.g., the tab cover layer 241 may be formed over the tab 230 to trace the outer shape of the tab 230 and/or be continuously conformal over the tab 230). For example, when a distance between the left side surface tab cover layer 241s1 and the right side surface tab cover layer 241s2 is w, w may be formed as a width that is the same as or within the same range as a width in the width direction of the tab 230. In this case, the same range may include an error range that may occur during the manufacturing process of the tab 230. For example, the error range may be ±3%. In other embodiments, for example, when a distance from the substrate 210 to the upper surface tab cover layer 241u is h, h may be formed as a height that is the same as or within the same range as a height in the height direction of the tab 230. In this case, the same range may include an error range that may occur during the manufacturing process of the tab 230. For example, the error range may be ±3%. Therefore, the tab cover layer 241 may be in close contact with the tab 230.

The substrate cover layer 242 may be provided on an upper surface of the substrate 210. For example, the substrate cover layer 242 may be provided on the substrate 210, and may include a left side surface cover layer 242a that is connected to the left side surface tab cover layer 241s1 and a right side surface substrate cover layer 242b that is connected to the right side surface tab cover layer 241s2. The substrate cover layer 242 may reinforce the substrate 210 and may be electrically connected to the substrate 210 at the same time.

In addition, the tab cover layer 241 and the substrate cover layer 242 may be electrically connected to each other. Therefore, the metal layer 240 may provide a path through which electrons can move from the substrate 210 via the metal layer 240 to the tab 230 even when cracks occur in the substrate 210. In other embodiments, the metal layer 240 may provide a path through which electrons can move from the tab 230 via the metal layer 240 to the substrate 210 even when cracks occur in the substrate 210. Accordingly, when the substrate 210 is bent along the electrode 200, the metal layer 240 may be bent along the substrate 210.

In this way, the metal layer 240 may be formed into a shape corresponding to the tab 230 through excellent rigidity and formability, and may maintain the shape. Accordingly, the metal layer 240 may prevent the tab boundary portion between the tab 230 and the substrate 210 from being exposed by the metal layer 240. Therefore, the metal layer 240 according to an embodiment of the present disclosure can prevent a problem of decreased reliability due to cracks occurring in the substrate 210.

Furthermore, the metal layer 240 may be joined to the substrate 210 through welding, thereby reducing process variation.

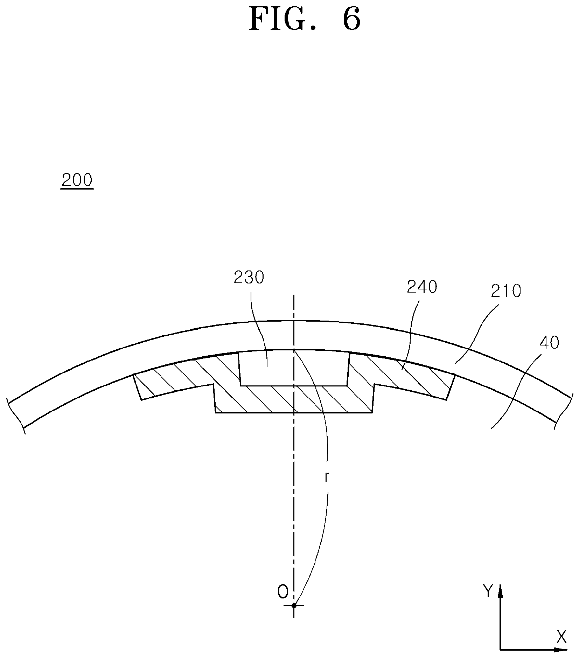

FIG. 6 is a cross-sectional view taken along line A-A' of FIG. 3 showing an example of a metal layer according to an embodiment of the present disclosure.

In FIG. 6, an electrode 200 (including, for example, the electrode described with respect to FIGS. 1 to 5) is shown, according to an embodiment of the present disclosure. In FIG. 6, an example of the metal layer 240 in a case where the electrode 200 included in the electrode assembly 40 is bent will be described.

As described with respect to FIGS. 1 to 5, the secondary battery 100 according to an embodiment of the present disclosure may include the electrode assembly 40 and the cylindrical case 50 that accommodates the electrode assembly 40. In this case, the electrode assembly 40 may be formed by being wound with a curvature. In addition, the metal layer 240 may also be formed by being bent with a curvature that is the same as or similar to that of the electrode assembly 40.

For example, the electrode assembly 40 may be wound to form a jelly roll. The electrode assembly 40 may be bent with a curvature. Accordingly, the electrode 200 included in the electrode assembly 40 may be bent with the same curvature as that of the electrode assembly 40. For example, a radius of curvature of the electrode 200 may be r. In this case, 1/r denotes the curvature of the electrode assembly 40. For example, r denotes the shortest distance from an upper surface of the substrate 210 to a winding center of the electrode assembly 40.

In this case, for example, the metal layer 240 may be provided on the substrate 210 in a direction toward a winding center portion (for example, O in FIG. 6). The metal layer 240 may be formed in the direction toward the winding center portion while covering the tab 230. Therefore, even when the electrode 200 expands, the metal layer 240 can receive less tensile force, thereby more effectively improving the reliability of the electrode 200.

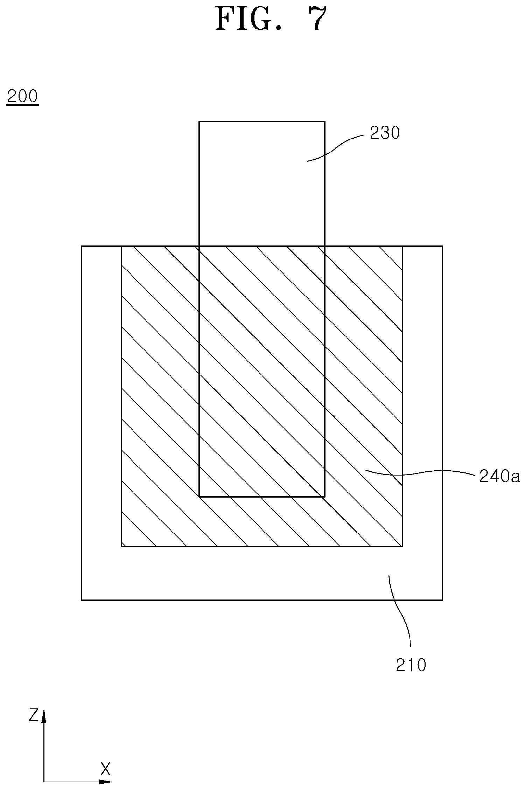

FIG. 7 is a top view schematically showing an electrode according to an embodiment of the present disclosure.

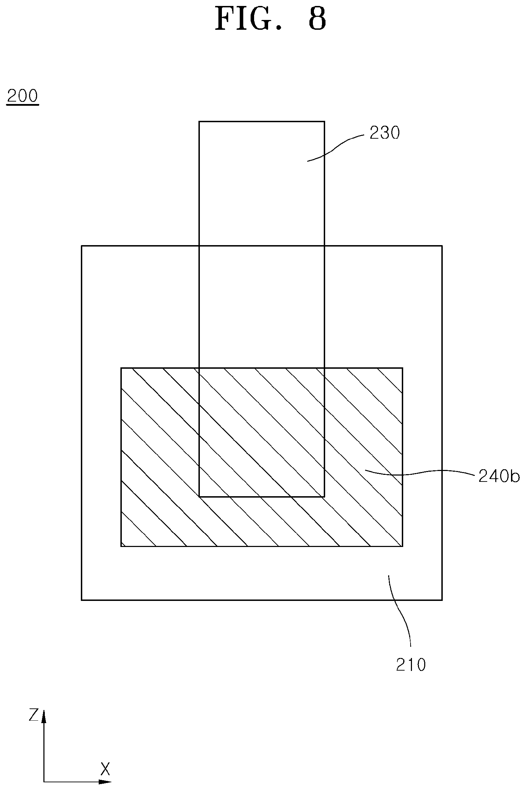

FIG. 8 is a top view schematically showing an electrode according to an embodiment of the present disclosure.

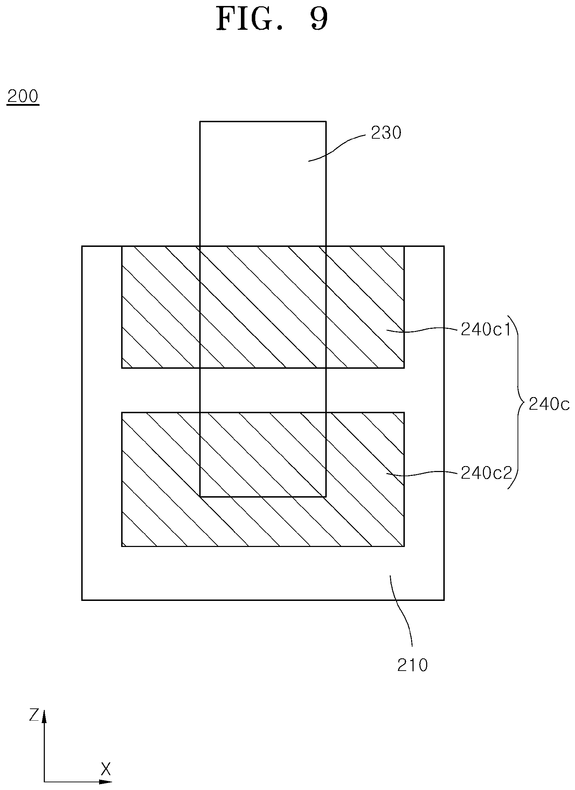

FIG. 9 is a top view schematically showing an electrode according to an embodiment of the present disclosure.

In each of FIGS. 7 to 9, an electrode 200 is shown (including, for example, the electrode described with respect to FIGS. 1 to 6) according to an embodiment of the present disclosure. In FIGS. 7 to 9, various embodiments of the metal layer 240 (240a in FIG. 7, 240b in FIG. 8 and 240c in FIG. 9) attached to the substrate 210 will be described.

As described with respect to FIGS. 2 to 6, the metal layer 240 according to an embodiment of the present disclosure may be provided on the substrate 210 while covering the tab 230.

For example, as shown in FIG. 7, the metal layer 240 may include a first metal layer 240a that covers the entire region of the tab 230 located on the substrate 210. The first metal layer 240a may be provided on the substrate 210 while covering all of a left side surface of the tab 230, a right side surface of the tab 230, and/or a bottom surface of the tab 230 connecting the left side surface and right side surface of the tab 230. Accordingly, the metal layer 240 can maximize the effect of reinforcing the strength of the substrate 210 and preventing cracks from occurring in the tab boundary portion.

For example, as shown in FIG. 8, the metal layer 240 may include a second metal layer 240b that covers a partial region of the tab 230 located on the substrate 210. The second metal layer 240b may be provided on the substrate 210 while covering a portion of the left side surface of the tab 230, a portion of the right side surface of the tab 230, and/or the bottom surface of the tab 230 connecting the left side surface and right side surface of the tab 230. Cracks in the substrate 210 generally occur frequently in the tab boundary portion between the tab 230 and the substrate 210. In particular, there is a high probability of vertical or horizontal cracks occurring along a longitudinal direction (z-axis direction) of the tab 230 or a width direction (x-axis direction) of the tab 230 from a point at which the side surfaces and the bottom surface of the tab 230 meet. The second metal layer 240b can reinforce a location at which the probability of occurrence of cracks is high.

For example, as shown in FIG. 9, the metal layer 240 may include a plurality of the metal layer 240c that cover partial regions of the tab 230 located on the substrate 210. In this case, the metal layer 240c may include a third upper metal layer 240c1 located relatively higher and a third lower metal layer 240c2 located relatively lower in the longitudinal direction (z-axis direction) of the tab 230. For example, the third upper metal layer 240c1 may be provided on the substrate 210 while covering another portion of the left side surface of the tab 230 and another portion of the right side surface of the tab 230. The third upper metal layer 240c1 may be positioned spaced apart from the third lower metal layer 240c2. The third lower metal layer 240c2 may be provided on the substrate 210 while covering a portion of the left side surface of the tab 230, a portion of the right side surface of the tab 230, and the bottom surface of the tab 230 connecting the left side surface and the right side surface of the tab 230. In this way, the metal layer 240c can reinforce a location at which the probability of occurrence of cracks is high through the third lower metal layer 240c2 and further contribute to reinforcing the strength of the substrate 210 through the third upper metal layer 240c1.

The embodiments of the metal layer 240 described with respect to FIGS. 7 to 9 are merely examples. The metal layer 240 may include a metallic material and may be applied in any form provided on the substrate 210 while covering at least a portion of the tab 230.

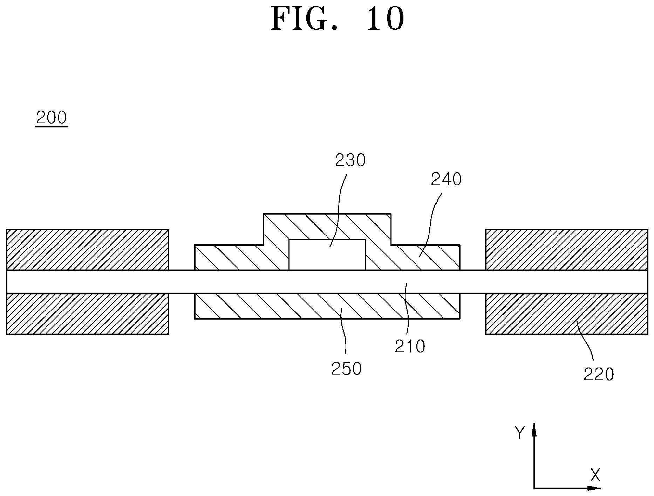

FIG. 10 is a cross-sectional view schematically showing an electrode according to an embodiment of the present disclosure.

In FIG. 10, an electrode 200 is shown (including, for example, the electrode described with respect to FIGS. 1 to 9) according to an embodiment of the present disclosure. As described with respect to FIGS. 2 to 9, the electrode 200 may include the metal layer 240 provided on the substrate 210 while covering the tab 230.

For example, the electrode 200 may further include an additional metal layer 250 provided on the other surface of the substrate 210 and including a metallic material.

The additional metal layer 250 may be provided on a opposite surface to the metal layer 240 with the substrate 210 interposed therebetween. For example, the additional metal layer 250 may be provided on a surface on which the tab 230 is not formed on the uncoated portion. In this case, the additional metal layer 250 may not be formed on the coated portion. In this way, since the additional metal layer 250 is provided so as not to come into contact with the coating layer 220, it is possible to prevent the problem of hindering the electron movement of the coating layer 220 and/or reducing the capacity of the secondary battery 100.

The additional metal layer 250 may include, for example, the same material as that of the substrate 210. For example, when the substrate 210 includes aluminum, the additional metal layer 250 may include aluminum. For example, when the substrate 210 includes copper, the additional metal layer 250 may include copper. In addition, the additional metal layer 250 may be joined to the substrate 210 through, for example, a welded portion formed by welding on the substrate 210. In this way, the additional metal layer 250 can improve the welding strength to the substrate by including the same material as that of the substrate 210.

With this configuration, the additional metal layer 250 according to an embodiment of the present disclosure can further improve the strength of the substrate 210 and prevent a problem of decreased reliability due to cracks occurring in the substrate 210.

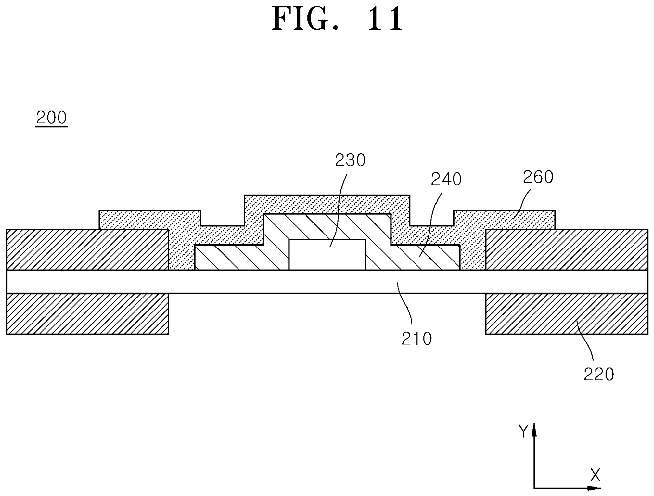

FIG. 11 is a cross-sectional view schematically showing an electrode according to an embodiment of the present disclosure.

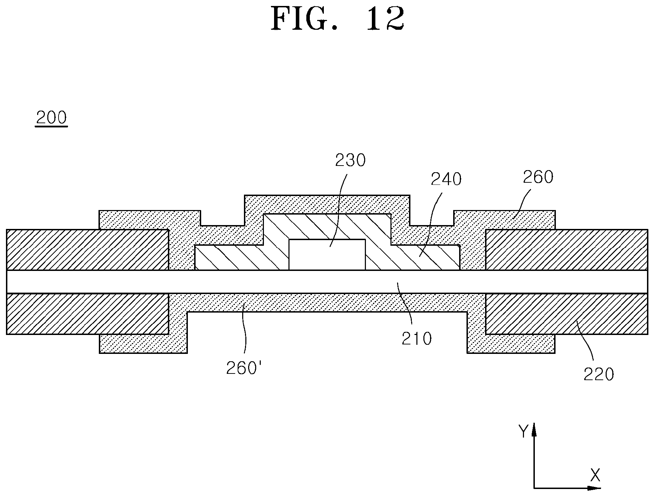

FIG. 12 is a cross-sectional view schematically showing an electrode according to an embodiment of the present disclosure.

In FIGS. 11 and 12, an electrode 200 is shown (including, for example, the electrode described with respect to FIGS. 1 to 10) according to an embodiment of the present disclosure. As described with respect to FIGS. 2 to 10, the electrode 200 may include the metal layer 240 provided on the substrate 210 while covering the tab 230.

The electrode 200 may further include an insulating tape 260 attached to the substrate 210 while covering the tab 230.

The insulating tape 260 may protect all or part of the components included in the electrode 200 from the outside. For example, the insulating tape 260 may prevent the substrate 210, the coating layer 220, the tab 230, and/or the metal layer 240 from being damaged by an external force or from being short-circuited by another electrode plate.

To this end, the insulating tape 260 may be attached to at least one surface of the substrate 210.

For example, as shown in FIG. 11, the insulating tape 260 may be attached to one surface of the substrate 210. For example, the insulating tape 260 may be attached to the surface of the substrate 210 on which the metal layer 240 is provided. For example, the insulating tape 260 may be attached to the substrate 210 while covering the metal layer 240 (which covers the tab 230).

In other embodiments, for example, as shown in FIG. 12, insulating tape 260 and insulating tape 260' may be attached to both surfaces of the substrate 210. For example, the insulating tape 260 may be attached to the surface of the substrate 210 on which the metal layer 240 is provided. In addition, for example, the insulating tape 260' may be attached to the surface of the substrate 210 on which the metal layer 240 is not provided. Therefore, the electrode 200 can secure safety in relation to other electrodes and/or separators located on one side and the other side of the electrode 200.

In this case, for example, the insulating tape 260 may be attached to the uncoated portion and may be attached to the substrate 210, the tab 230, and/or the metal layer 240. Furthermore, the insulating tape 260 may also be attached to the coated portion. For example, the insulating tape 260 may be attached to the uncoated portion, and may cover the coating layer 220 by extending from the uncoated portion toward the coated portion. Therefore, the insulating tape 260 can protect all or part of the components included in the electrode 200 from the outside.

In addition, to this end, the insulating tape 260 may include an insulating material.

For example, the insulating material may include at least one of polyimide (PI), polysulfone, polyurethane (PU), polyamide (PA), 6,6 nylon, polycarbonate (PC), polytetrafluoroethylene (PTFE), polymethyl methacrylate (PMMA), and polyethylene terephthalate (PET).

Meanwhile, the insulating tape 260 may further include an adhesive material so that the insulating material is attached to the substrate 210, the coating layer 220, the tab 230, and/or the metal layer 240 with adhesiveness.

For example, the adhesive material may include at least one of a silicone resin, an acrylic resin, a urethane resin, a rubber resin, an epoxy resin, a polyolefin, and a combination thereof.

For example, the acrylic resin may include acrylic, an ester copolymer, ethyl acrylate, butyl acrylate, hexyl acrylate, n-octyl acrylate, iso-octyl acrylate, 2-ethylhexyl acrylate, isononyl acrylate, aryl acrylate, acrylic acid, maleic acid, fumaric acid, itaconic acid, kryptonic acid, acrylamide, N-vinyl pyrrolidone, N-vinyl caprolactam, acrylonitrile, acryloyl morpholine, 2-hydroxyethyl acrylate, 2-hydroxypropyl acrylate, 2-hydroxybutyl acrylate, and the like.

For example, the urethane resin may include polyurethane, etc.

For example, the rubber resin may include natural rubber, synthetic rubber, etc.

Therefore, the electrode 200 according to an embodiment of the present disclosure may provide a method of protecting each component included in the electrode 200.

Meanwhile, when the electrode 200 further includes the additional metal layer 250 as described with respect to FIG. 9, the insulating tape may be attached to the other surface of the substrate 210 while covering the additional metal layer 250.

When the secondary battery is charged, the electrode may expand. In this case, as the electrode is compressed by expansion, the substrate may be deformed. In particular, stress applied to the substrate may be concentrated in a tab boundary portion, which is a region where the tab is attached in the substrate. Accordingly, the tab boundary portion may reach a local elongation limit, and cracks may occur in the tab boundary portion.

In particular, recently, as higher capacity secondary batteries are required, the substrate tends to become thinner. Accordingly, cracks may occur more easily in the substrate.

When cracks occur in the electrode, the resistance of the secondary battery increases, heat generates around the cracks, and/or the capacity of the secondary battery decreases, thereby decreasing the reliability of the secondary battery.

An embodiment of the present disclosure relates to an electrode and/or a secondary battery that prevents (e.g., or minimizes) cracks from occurring in a substrate.

Another embodiment of the present disclosure relates to an electrode and/or a secondary battery that maintains electrical conductivity even when cracks occur in the substrate.

According to the present disclosure, an electrode and/or a secondary battery with improved reliability can be provided.

However, the effects that can be achieved through the present disclosure are not limited to the above-described effects, and other technical effects not mentioned will be clearly understood by those of ordinary skill in the art from the description of the disclosure described below.

Although the present disclosure has been described above with limited examples and drawings, the present disclosure is not limited thereto, and it is obvious that various modifications and variations may be made by those skilled in the art in the technical field to which the present disclosure belongs within the technical idea of the present disclosure and the equivalent scope of the patent claims described below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described with respect to connection with a particular embodiment may be used singly or in combination with features, characteristics, and/or elements described with respect to connection with other embodiments unless otherwise specifically indicated. Accordingly, it will be understood by those of skill in the art that various changes in form and details may be made without departing from the spirit and scope of the present invention as set forth in the following claims.

The present disclosure additionally includes the following numbered embodiments:
1. An electrode, comprising:
   a substrate;
   a tab having a first side joined to one surface of the substrate and a second side extending away from the substrate, the first side and the second side being opposite each other along a longitudinal direction of the tab; and
   a metal layer on the substrate and covering at least a portion of the tab, the metal layer including a metallic material.
2. The electrode according to embodiment 1, wherein the metal layer is joined to the substrate by a welded portion.
3. The electrode according to embodiment 2, wherein the welded portion is spaced a predetermined distance apart from the tab and is parallel to the tab.
4. The electrode according to embodiment 1, wherein the metal layer and the substrate include a same material.
5. The electrode as according to embodiment 4, wherein:
   the substrate comprises aluminum, and
   the metal layer comprises aluminum, a metal coated with aluminum, aluminum coated with another material, or an alloy including aluminum.
6. The electrode according to embodiment 4, wherein:
   the substrate comprises copper, and
   the metal layer comprises copper, a metal coated with copper, copper coated with another material, or an alloy including copper.
7. The electrode according to embodiment 1, wherein:
   the substrate comprises copper, and
   the metal layer comprises at least one of iron, stainless steel, nickel, gold, silver and a combination thereof.
8. The electrode according to embodiment 1, wherein, in a cross-section of the tab perpendicular to a longitudinal direction of the tab, the metal layer includes:
   a tab cover layer corresponding to a shape of the tab, the tab cover layer surrounding the tab; and
   a substrate cover layer extending from the tab cover layer, the substrate cover layer being on the substrate.
9. The electrode according to embodiment **1,** further comprising an additional metal layer on another surface of the substrate, the additional metal layer including a metallic material.
10. The electrode according to embodiment **1,** further comprising an active material layer on a part of another surface of the substrate, wherein:
   the tab is joined on the one surface of the substrate without the active material layer, and
   the metal layer does not cover the active material layer.
11. A secondary battery, comprising:
   an electrode assembly in which an electrode and a separator are alternately stacked; and
   a case in which the electrode assembly is accommodated, and
   wherein the electrode includes:
      a substrate;
      a tab having a first side joined to one surface of the substrate and a second side extending away from the substrate, the first side and the second side being opposite each other along a longitudinal direction of the tab; and
      a metal layer on the substrate and covering at least a portion of the tab, the metal layer including a metallic material.
12. The secondary battery according to embodiment 11, wherein the metal layer is joined to the substrate by a welded portion.
13. The secondary battery according to embodiment 11, wherein the welded portion is spaced a predetermined distance apart from the tab, the welded portion being parallel to the tab.
14. The secondary battery according to embodiment 11, wherein the metal layer and the substrate include a same material.
15. The secondary battery according to embodiment 11, wherein, in a cross-section of the tab perpendicular to a longitudinal direction of the tab, the metal layer includes:
   a tab cover layer corresponding to a shape of the tab, the tab cover layer surrounding the tab; and
   a substrate cover layer extending from the tab cover layer, the substrate cover layer being on the substrate.

## Claims

1. An electrode (200), comprising:
a substrate (210);
a tab (230) having a first side joined to one surface of the substrate (210) and a second side extending away from the substrate (210), the first side and the second side being opposite each other along a longitudinal direction of the tab; and
a metal layer (240) on the substrate (210) and covering at least a portion of the tab (230), the metal layer (240) including a metallic material.

2. The electrode (200) as claimed in claim 1, wherein the metal layer (240) is joined to the substrate (210) by a welded portion.

3. The electrode (200) as claimed in claim 2, wherein the welded portion is spaced a predetermined distance apart from the tab (230) and is parallel to the tab (230).

4. The electrode (200) as claimed in any one of claims 1 to 3, wherein the metal layer (240) and the substrate (210) include a same material.

5. The electrode (200) as claimed in any one of claims 1 to 4, wherein:
the substrate (210) comprises aluminum, and
the metal layer (240) comprises aluminum, a metal coated with aluminum, aluminum coated with another material, or an alloy including aluminum.

6. The electrode (200) as claimed in any one of claims 1 to 5, wherein:
the substrate (210) comprises copper, and
the metal layer (240) comprises copper, a metal coated with copper, copper coated with another material, or an alloy including copper.

7. The electrode (200) as claimed in any one of claims 1 to 6, wherein:
the substrate (210) comprises copper, and
the metal layer (240) comprises at least one of iron, stainless steel, nickel, gold, silver and a combination thereof.

8. The electrode (200) as claimed in any one of claims 1 to 7, wherein, in a cross-section of the tab (230) perpendicular to a longitudinal direction of the tab (230), the metal layer (240) includes:
a tab cover layer (241) corresponding to a shape of the tab (230), the tab cover layer (241) surrounding the tab (230); and
a substrate cover layer (242) extending from the tab cover layer (241), the substrate cover layer (242) being on the substrate (210).

9. The electrode (200) as claimed in any one of claims 1 to 8, further comprising an additional metal layer (250) on another surface of the substrate (210), the additional metal layer (250) including a metallic material.

10. The electrode (200) as claimed in any one of claims 1 to 9, further comprising an active material layer on a part of another surface of the substrate (210), wherein:
the tab (230) is joined on the one surface of the substrate (210) without the active material layer, and
the metal layer (240) does not cover the active material layer.

11. A secondary battery (100), comprising:
an electrode assembly (40) in which an electrode (200) and a separator (30) are alternately stacked; and
a case (50) in which the electrode assembly (40) is accommodated, and
wherein the electrode (200) includes:
a substrate (210);
a tab (230) having a first side joined to one surface of the substrate (210) and a second side extending away from the substrate (210), the first side and the second side being opposite each other along a longitudinal direction of the tab (230); and
a metal layer (240) on the substrate (210) and covering at least a portion of the tab (230), the metal layer (240) including a metallic material.

12. The secondary battery (100) as claimed in claim 11, wherein the metal layer (240) is joined to the substrate (210) by a welded portion.

13. The secondary battery (100) as claimed in claim 11 or 12, wherein the welded portion is spaced a predetermined distance apart from the tab (230), the welded portion being parallel to the tab (230).

14. The secondary battery (100) as claimed in any one of claims 11 to 13, wherein the metal layer (240) and the substrate (210) include a same material.

15. The secondary battery (100) as claimed in any one of claims 11 to 14, wherein, in a cross-section of the tab (230) perpendicular to a longitudinal direction of the tab (230), the metal layer (240) includes:
a tab cover layer (241) corresponding to a shape of the tab (230), the tab cover layer (241) surrounding the tab (230); and
a substrate cover layer (242) extending from the tab cover layer (241), the substrate cover layer (242) being on the substrate (210).
